# EUROPEAN PATENT APPLICATION

(11) **EP 1 873 010 A2**
(43) Date of publication of application: **02.01.2008**
(21) Application number: 07111437.5
(22) Date of filing: 29.06.2007
(51) Int. Cl.: B60P 3/12, B60P 1/02

(54) **Trailer**

(30) Priority: 29.06.2006 NL 1032077
(71) Applicant: Klapwijk, Arie, 7783 DE Gramsbergen (NL)
(72) Inventor: Klapwijk, Arie, 7783 DE Gramsbergen (NL)
(74) Representative: Bakker, Hendrik

(57) **Abstract**

The invention relates to a trailer, comprising a U-shaped frame (1) with a pole (4) and with two legs each provided with a wheel (3), as well as a platform (2), drive means (7) and guiding means, for the up and down movement of the platform (2) parallel to the frame (1). The minimal three guiding means are embodied as two under a 45 degree angle slanted profiles that can move along two wheels that are attached to the frame (1), and drive means (7) are accommodated in an also under a 45 degree angle slanted central profile (8) that connects the platform to the U-shaped frame (1).

## Description

The invention relates to a trailer, comprising an at least substantially U-shaped frame with two legs each provided with a wheel and with a connecting member connecting both legs provided with a pole, as well as a platform and drive means and guiding means for movement of the platform at least almost parallel to the frame characterized in that the guiding means are arranged for simultaneously guiding the platform upwards and in the direction of the connecting member or in an opposite direction, and that the drive means are accommodated in one of the guiding means. Trailers of this type are known. They are used, for example, to transport motorbikes to where they are used. With the platform in the lowest position the motorbike is driven on to it and tied down, then the platform is raised in the highest position and the trailer is ready for use.

Known trailers are all characterized by the relatively complicated system of guiding means which ensure that when the platform moves from the lowest to the highest position the platform remains nearly horizontal. The trailer according to the invention has the feature that the guiding means are arranged for simultaneously guiding the platform upwards and in the direction of the connecting member or in an opposite direction, and that the drive means are accommodated in one of the guiding means, which results in a very simple and robust construction. In addition the guiding means, for example, are placed at a 45 degree angle with respect to the frame.

A favourable embodiment of the trailer according to the invention has the feature that the guiding means comprise two slanting profiles and two objects moveably arranged therein that connect the platform to the legs, and a slanting central profile that connects the platform to the connecting member.. The moveable arranged objects can be wheels that can roll through the slanting objects, but also, for example, plastic blocks that can slide along the slanting objects. Preferably the slanting profiles are mounted on the platform and the moveable arranged objects are mounted on the frame, which has the advantage that the platform can be lowered to the ground. Such an embodiment of a trailer can be used for the transport of all sorts of rolling and sailing material, for example a motorbike, speed boat, jet ski, but also for objects which are difficult to transport such as a hydraulic arm, vibrating plate, lawnmower, motorised wheelchair or a quad bike.

A further favourable embodiment has the feature that the central profile comprises a first profile section mounted to the frame and a second profile section mounted to the platform that can glide along the first profile section. The second profile section is than preferably provided with mounting means for mounting a load of the trailer to the second profile section. For the transport of a motorbike, for example, the second profile section can be provided with a clamp, into which the front wheel can be placed and can be secured, for example, with a strap.

Another favourable embodiment has the feature that the first profile section has an at least substantially rectangular cross-section and the second profile section has an at least substantially U-shaped cross-section. Preferably the first profile section is provided with bearings in the shape of plastic strips, for minimal friction, while in the first profile section the drive means can be stored.

A further favourable embodiment has the feature that the first profile section is provided with a bobbin or a hydraulic cylinder or a cable winder or a belt winder, which form the drive means by which the second profile section can be moved relative to the first profile section.

Another favourable embodiment has the feature that the first profile section and the second profile section each are provided with an opening such that, when the platform is in a highest position, both openings at least almost coincide. In this position a padlock can be put through both openings so that it becomes virtually impossible to take the platform down to its lowest position, which makes it very difficult to steal the load.

Another favourable embodiment has the feature that the legs each are provided with an opening and the platform is provided with two bolts provided with springs, that are embodied such that when the platform is in a highest position the bolts fall into the openings. It will then be sufficient to bring the platform in its highest position, whereupon the bolts will lock the platform in the highest position. Preferably, there is also provided unlocking means positioned near the connecting member, to pull the bolts out of the openings, whereupon the platform can be lowered with the drive means.

The invention will now be further elucidated with reference to the following figures, in which:
- Fig. 1: shows a side view of a possible embodiment of a trailer according to the invention, with the platform in a lowest position;
- Fig. 2: shows a side view of this embodiment in side view, with the platform in a highest position;
- Fig. 3: shows a top view of this embodiment, with the platform in a lowest position;
- Fig. 4A: shows a more detailed side view of the drive means with the platform in the lowest position;
- Fig. 4B: shows a more detailed view of the drive means with the platform in the highest position;
- Fig. 5: shows a more detailed top view of the drive means with the platform in the lowest position;
- Fig. 6A: shows a more detailed view of the locking means with the platform in the lowest position;
- Fig. 6B: shows a more detailed view of the locking means with the platform almost in the highest position.

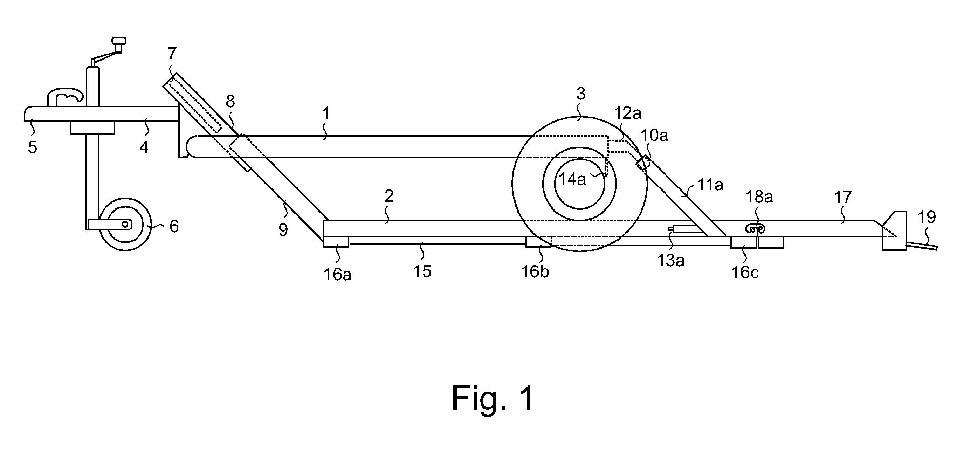

Fig. 1 shows a possible side view of an embodiment of a trailer according to the invention, with a U-shaped frame 1 and a platform 2 that can be moved upwards and downwards between the legs of U-shaped frame 1 and which is shown here in the lowest position. In this position for example a motorbike or a jet ski can be easily placed on the platform 2 and can be secured for example with lashes, whereupon platform 2 can be brought in a highest position and then the trailer is ready to transport its cargo. Furthermore the trailer is provided with the usual components such as wheels 3, a pole 4 with coupling 5 and an adjustable support wheel 6. For the up and down movement of platform 2 there is provided a drive 7, situated in a central profile 8, where an in cross-section U-shaped cover 9 can slide over that together with drive 7 is mounted to platform 2. In this way drive 7 can pull platform 2 simultaneously forward and upward. Furthermore platform 2 is kept horizontally by means of two wheels 10a, 10b that are attached on the end of the U-shaped frame 1, which are enclosed in two slanting profiles 11 a and 11 b. Profiles 11 a, 11 b are open on the bottom side to allow mounting arms 12a,12b of wheels 10a, 10b to pass and they have the same slope as central profile section 8, for example 45 degrees. Instead of wheels 10a, 10b that can roll in profiles 11 a, 11 b, also blocks fabricated from plastic or for example bronze can be used that can slide in profiles 11 a, 11 b. On platform 2 the locking means 13a,13b are mounted, that when platform 2 is in the highest position, fall into two openings 14a,14b in frame 1,as a result of which platform 2 can never drop unintentionally. Drive 7 is for example a screw jack or cable winder or belt winder, by which platform 2 by means of a winder can be moved upward, but preferably drive 7 is embodied as a hydraulic cylinder, that can be controlled by a hydraulic pump unit not shown in the figure. Frame 1 consist in the shown embodiment of a round tube bent into a U-shaped. Platform 2 consists of a longitudinal beam 15 and a system of crossbeams 16a, 16b, 16c, on which a metal plate is mounted. In the embodiment shown here the rear part 17 is detachable fixed in an obvious manner to platform 2 by means of two hooks 18a, 18b, which simplifies the trailers storage. Furthermore there is a central part 19 from the rear end 17 which can be folded down, which simplifies the loading and unloading of the trailer.

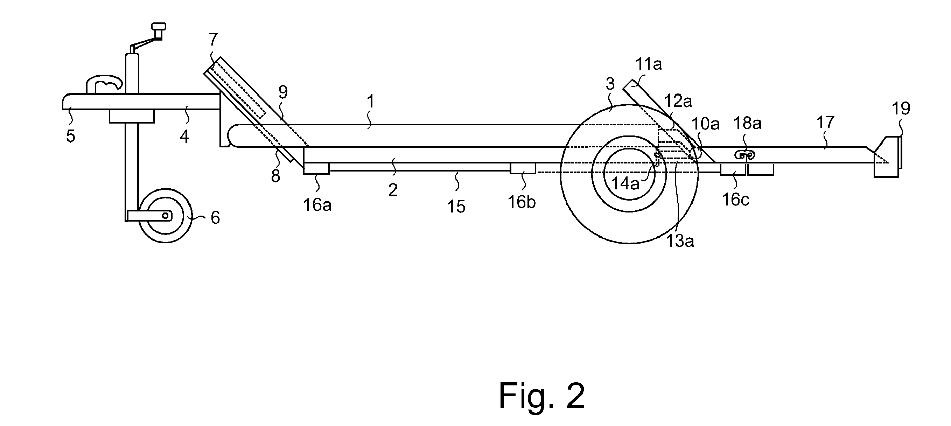

Fig. 2 shows a side view of this embodiment with platform 2 in a highest position, with drive 7 in central profile 8 which has now pulled in cross-section U-shaped cover 9 and platform 2 forward and upward, keeping platform 2 horizontal by means of two wheels 10a, 10b that are attached on the end of the U-shaped frame 1, which are enclosed in two slanting profiles 11 a and 11 b. Further locking means 13a, 13b are shown, that now fall into the two openings 14a, 14b in frame 1. Central part 19 of rear end piece 17 is now folded up and can be used, for example, as mounting plate for a number plate or license plate.

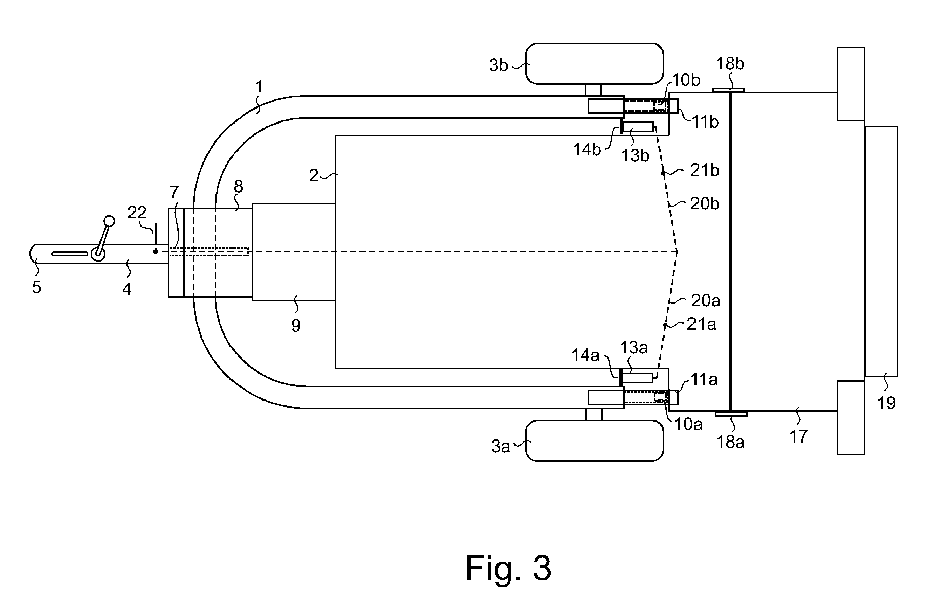

Fig. 3 shows a top view of this embodiment with platform 2 in a lowest position, with a U-shaped frame 1 and platform 2 that can be moved upwards and downwards between the legs of U-shaped frame 1 by drive 7, situated in central profile 8, where in cross-section U-shaped cover 9 can slide over which is mounted together with drive 7 to platform 2. Furthermore platform 2 is held horizontally with the help of two wheels 10a, 10b attached on the end of U-shaped frame 1 that are locked into two slanting profiles 11 a, 11 b. Locking means 13a, 13b are mounted to platform 2 which fall into two openings 14a, 14b in frame 1, when platform 2 is in the highest position, and can be pulled out of two openings 14a, 14b by means of two rods 20a, 20b which are mounted for rotation around axis 21 a, 21 b and can be controlled together with a handle 22 at pole 4. In the embodiment shown the rear end 17 is detachably mounted to platform 2 by means of two hooks 18a, 18b and central part 19 of rear end 17 is folded down.

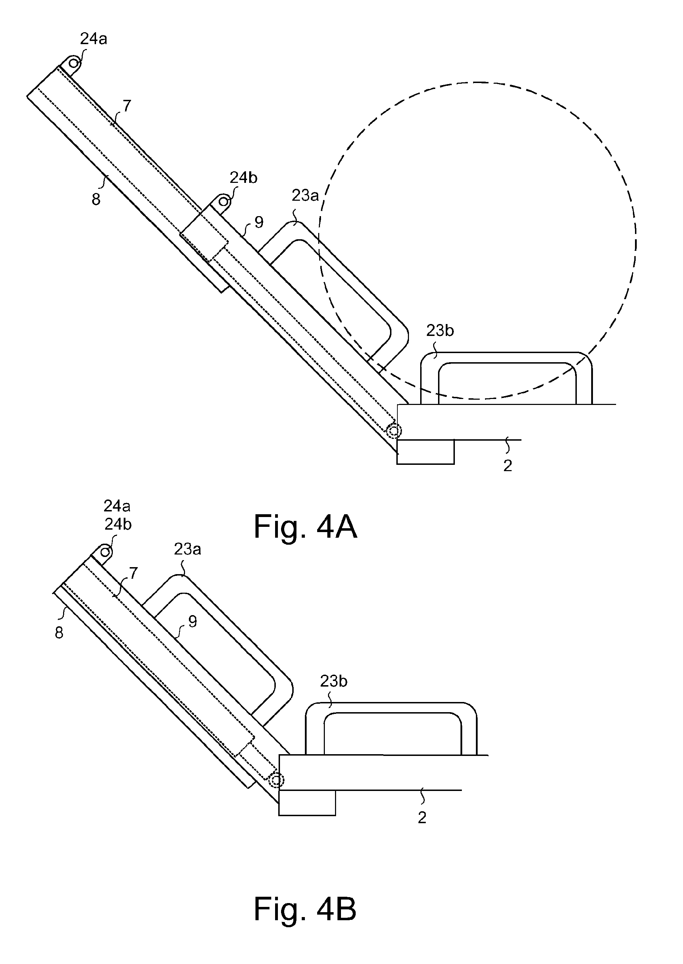

Fig. 4A shows a more detailed side view of the drive means provided with a hydraulic cylinder 7, when platform 2 is in the lowest position, together with central profile 8 and with in cross-section U-shaped cover 9 that together with an end of the hydraulic cylinder is mounted on platform 2. In the embodiment shown U-shaped clamps 23a, 23b are mounted to in cross-section U-shaped cover 9 and to platform 2, wherein a wheel of a motorbike can be placed and secured. Preferably the central profile 8 is further provided with an opening 24a and in cross-section U-shaped cover 9 with an opening 24b, that are placed such that they almost coincide when platform 2 is in its highest position, so that they can for example be coupled with a padlock. Fig. 4B shows a more detailed view of the drive means with the platform 2 in the highest position. Opening 24a and opening 24b now coincide , so that a padlock can be installed after which it is made impossible to lower platform 2.

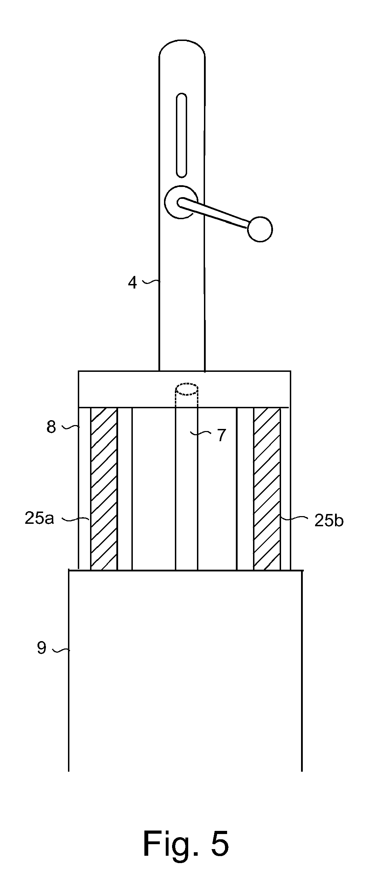

Fig. 5 shows a more detailed top view of the drive means when the platform 2 is in the lowest position. Central profile 8 is visible, which is arranged partly open on the top side, whereby hydraulic cylinder 7 is visible and whereupon plastic strips 25a, 25b are mounted that act as a glide bearing, so that in cross-section U-shaped cover 9 can glide over central profile 8 with minimal friction.

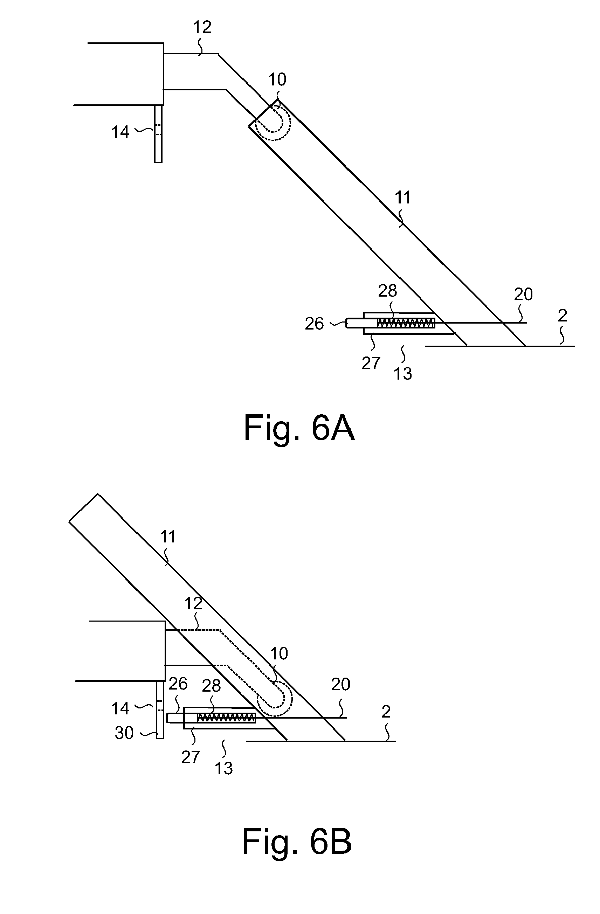

Fig. 6A shows a more detailed view of a locking means 13, with the platform 2 in the lowest position. A locking means 13 comprises a bolt 26 that is slidably mounted in a case 27 to platform 2 and is further provided with a spring 28. Further provided is a rod 20 by which a bolt 26 can be pulled into case 27. Fig. 6B shows a more detailed view of locking means 13 just before platform 2 reaches the highest position. Bolt 26 runs to a plate 30 and will fall into opening 14 in a further obvious manner, when the platform moves a little further upward, after which the locking is completed.. To unlock, bolt 26 can be pulled into case 27 by means of rod 20.

## Claims

1. Trailer, comprising an at least substantially U-shaped frame with two legs each provided with a wheel and with a connecting member connecting both legs provided with a pole, as well as a platform and drive means and guiding means for movement of the platform at least almost parallel to the frame **characterized in that** the guiding means are arranged for simultaneously guiding the platform upwards and in the direction of the connecting member or in an opposite direction, and that the drive means are accommodated in one of the guiding means.

2. Trailer according to claim 1, **characterized in that** the guiding means comprise two slanting profiles and two objects moveably arranged therein that connect the platform to the legs, and a slanting central profile that connects the platform to the connecting member.

3. Trailer according to claim 2, **characterized in that** the central profile comprises a first profile section mounted to the frame and a second profile section mounted to the platform that can glide along the first profile section.

4. Trailer according to claim 3, **characterized in that** the second profile section is provided with mounting means for mounting a load of the trailer to the second profile section.

5. Trailer according to claim 3 or 4, **characterized in that** the first profile section has an at least substantially rectangular cross-section and the second profile section has an at least substantially U-shaped cross-section.

6. Trailer according to claim 3, 4 or 5, **characterized in that** the first profile section is provided with bearings in the shape of plastic strips.

7. Trailer according to claim 3, 4 or 5 or 6, **characterized in that** the first profile section is provided with a bobbin or a hydraulic cylinder or a cable winder or a belt winder.

8. Trailer according to claim 4, **characterized in that** the first profile section and the second profile section each are provided with an opening such that, when the platform is in a highest position, both openings at least almost coincide.

9. Trailer according to one of the former claims, **characterized in that** the legs each are provided with an opening and the platform is provided with two bolts provided with springs, that are embodied such that when the platform is in a highest position the bolts fall into the openings .

10. Trailer according to claim 9, **characterized in that** unlocking means are provided, positioned near the connecting member, to enable the bolts to be pulled out of the openings.
